# EUROPÄISCHE PATENTSCHRIFT

(11) **EP 1 530 185 B1**
(45) Veröffentlichungstag und Bekanntmachung des Hinweises auf die Patenterteilung: **15.11.2006**
(21) Anmeldenummer: 04104246.6
(22) Anmeldetag: 03.09.2004
(51) Int. Cl.: G08G 1/16, B60K 35/00

(54) **Informationsvorrichtung**
Information apparatus
Dispositif d'information

(30) Priorität: 10.10.2003 DE 10347213
(43) Veröffentlichungstag der Anmeldung: 11.05.2005
(73) Patentinhaber: ROBERT BOSCH GMBH, 70442 Stuttgart (DE)
(72) Erfinder: Michi, Harald, 75248 Oelbronn-Duerrn (DE); Hoetzer, Dieter, 71706 Markgroeningen (DE)

(56) Entgegenhaltungen:
- EP-A- 1 030 188
- DE-A1- 10 141 920
- US-B1- 6 366 845
- US-B1- 6 452 533
- US-B1- 6 559 762

## Beschreibung

Die Erfindung geht aus von einer Informationsvorrichtung nach der Gattung des Hauptanspruchs. Bewegt sich ein Fahrzeug im Straßenverkehr hinter vor dem Fahrzeug vorausfahrenden Fahrzeugen, so muss ein Fahrer auf Fahraktionen der vorausfahrenden Fahrzeuge reagieren. Hierbei ergibt sich die Schwierigkeit, dass mit dem menschlichen Auge Geschwindigkeitsunterschiede und Verzögerungen nur schwer angemessen erfassbar sind. Eine Erfassung wird durch schlechte Sichtverhältnisse gegebenenfalls noch erschwert. Daher sind an Fahrzeugen Bremsleuchten vorgesehen, die zwangsläufig bei einer Betätigung einer Fahrzeugbremse aktiviert werden, so dass dem nachfolgenden Fahrzeug eine Verzögerung angezeigt wird. Gegebenenfalls ist es aber auch möglich, dass die Geschwindigkeit eines vorausfahrenden Fahrzeugs z.B. durch Verringerung einer Kraftstoffzufuhr ohne ein Aufleuchten der Bremsleuchte abnimmt. Zudem wird die Bremsleuchte bei einer Betätigung einer Fahrzeugbremse unabhängig davon aktiviert, wie stark die Bremse betätigt wird. Für einen nachfolgenden Fahrer ist es damit nicht ersichtlich, ob das vor ihm fahrende Fahrzeug eine Vollbremsung durchführt oder die eigene Geschwindigkeit nur gering beeinflusst. Aus der DE 199 04 118 A1 ist es hierzu bekannt, dass über eine Beeinflussung des Bremslichts in Abhängigkeit von der Fahrzeuggeschwindigkeit oder von dem Abstand zu einem vorausfahrenden Kraftfahrzeug die Intensität der Bremsleuchte gesteuert wird. In diesem Verfahren kann zwar Schutz vor einem auffahrenden Fahrzeug gegeben werden, dem Fahrer selbst wird jedoch keine zusätzliche Information darüber gegeben, ob sein Abstand und seine Geschwindigkeit gegenüber einem vorausfahrenden Fahrzeug angemessen ist. Ferner sind auch Vorrichtungen zum abstandsgeregelten Folgefahren bekannt, bei dem eine Fahrzeuggeschwindigkeit eines nachfolgenden Fahrzeugs an die Geschwindigkeit des vorausfahrenden Fahrzeugs automatisch angepasst wird. Da bei derartigen Verfahren jedoch in den Triebstrang mit eingegriffen werden muss, ist ein Einbau - insbesondere ein nachträglicher Einbau - in ein Fahrzeug aufwendig.

Die US 6,366,845 B1 zeigt eine Vorrichtung zum Überwachen eines Abstandes zu einem vorausfahrenden Fahrzeug. Wird der Abstand zu dem vorausfahrenden Fahrzeug zu klein, wird eine Warnung ausgegeben. Ferner wird auch die Geschwindigkeit des Fahrzeugs selbst berücksichtigt. Ein verbleibender Restabstand zu einer Gefahrenzone zum vorausfahrenden Fahrzeug wird in einer Balkenanzeige dargestellt.

### Vorteile der Erfindung

Die erfindungsgemäße Informationsvorrichtung mit den Merkmalen des Hauptanspruchs hat demgegenüber den Vorteil, dass ein Fahrer dann informiert wird, wenn er seine Geschwindigkeit an die Geschwindigkeit des vorausfahrenden Fahrzeugs anpassen muss und seine Geschwindigkeit selbst verringern muss. Da für den Einbau lediglich eine Messeinheit zur Bestimmung der Geschwindigkeit des vorausfahrenden Fahrzeugs und eine Ausgabeeinheit erforderlich ist, kann ein Einbau auch nachträglich gut realisiert werden. Zumindest ist eine Montage mit recht geringem Aufwand möglich, wobei ein Fahrer dennoch über ein Kollisionsrisiko informiert wird.

Erfindungsgemäß erfolgt eine symbolhafte Darstellung eines vorausfahrenden Fahrzeugs in einer Anzeige, wobei die Warnanzeige auf die symbolhafte Darstellung des Fahrzeugs bezogen ist. Hierdurch kann ein Fahrer die Warnung in einfacher Weise in unmittelbarem Bezug zu dem vorausfahrenden Fahrzeug setzen. Hierbei wird eine aktivierte Bremsleuchte im Bezug auf das vorausfahrende Fahrzeug dargestellt da dieses Symbol durch einen Fahrer besonders leicht erfasst werden kann. Zudem kann eine seitliche Bewegung bzw. ein seitlicher Bewegungswunsch angezeigt werden, der über eine Erfassung eines Blinkersignals des vorausfahrenden Fahrzeugs ermittelt wird. Hierdurch kann sich ein Fahrer auf eine eventuelle seitliche Bewegung des vorausfahrenden Fahrzeugs einstellen.

Durch die in den Unteransprüchen aufgeführten Maßnahmen sind vorteilhafte Weiterbildungen und Verbesserungen der im Hauptanspruch angegebenen Informationsvorrichtung möglich. Vorteilhaft ist es, einen Videosensor zur Überwachung des Fahrraums vor dem Fahrzeug vorzusehen. Bevorzugt dient dieser dazu, die Szenerie vor dem Fahrzeug entsprechend in einer Anzeige wiederzugeben. Ferner ist der Videosensor vorteilhaft dazu ausgelegt, eine Aktivierung einer Bremsleuchte des vorausfahrenden Fahrzeugs als zusätzlichen Hinweis für eine Verzögerung des vorausfahrenden Fahrzeugs zu erfassen.

Zur besseren Wiedererkennung wird mit dem Videosensor ferner vorzugsweise die Form und/oder die Farbe des vorausfahrenden Fahrzeugs bestimmt. Insbesondere eine symbolische Darstellung des vorausfahrenden Fahrzeugs kann dann in der Weise erfolgen, dass die Form und/oder die Farbe eines Piktogramms des vorausfahrenden Fahrzeugs an das tatsächliche Erscheinungsbild des vorausfahrenden Fahrzeugs angepasst wird. Hierdurch wird es für einen Betrachter erleichtert, auf welches vorausfahrende Fahrzeug, z.B. bei mehreren parallelen Fahrspuren, sich die mit der Ausgabeeinheit ausgegebenen Hinweise beziehen.

Ferner ist es vorteilhaft, einen Speicher zur Aufzeichnung der Verkehrssituation vor dem Fahrzeug vorzusehen. Damit kann z.B. ein Kennzeichen des vorausfahrenden Fahrzeugs ermittelt und gegebenenfalls gespeichert werden.

Um eine Aussage bezüglich einer geforderten Geschwindigkeitsverringerung zu verbessern, wird nicht lediglich die Geschwindigkeit, sondern zusätzlich auch der Abstand zu dem vorausfahrenden Fahrzeug bestimmt. Eine Messeinheit ist hierzu bevorzugt als ein Radarsensor ausgebildet, so dass die Geschwindigkeitsmessung und die Abstandsmessung mit einer Messeinheit möglich sind.

### Zeichnung

Ausführungsbeispiele der Erfmdung sind in der Zeichnung dargestellt und in der nachfolgenden Beschreibung näher erläutert. Es zeigen
Figur 1 eine erfindungsgemäße Informationsvorrichtung in einer schematischen Darstellung in einem Fahrzeug hinter einem vorausfahrenden Fahrzeug,
Figur 2 ein Ausführungsbeispiel für eine Anzeigendarstellung einer erfindungsgemäßen Informationsvorrichtung.

### Beschreibung des Ausführungsbeispiels

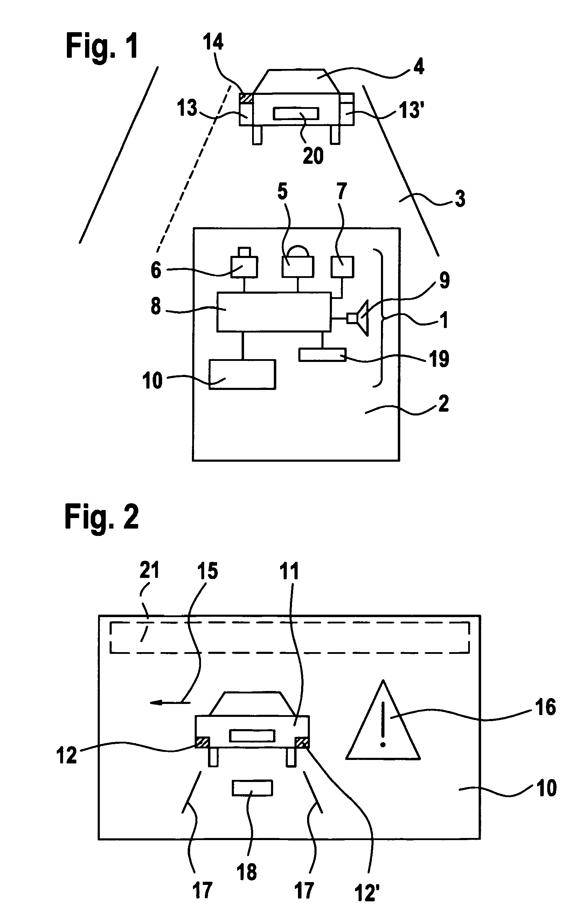

In der Figur 1 ist eine erfindungsgemäße Informationsvorrichtung 1 schematisch innerhalb eines Kraftfahrzeugs 2 dargestellt. Das Fahrzeug 2 befindet sich auf einer Straße 3, wobei vor dem Fahrzeug 2 ein weiteres, vorausfahrendes Fahrzeug 4 fährt. Die Informationsvorrichtung 1 weist einen Radarsensor 5 auf, der einer Geschwindigkeits- und Abstandsmessung zu dem vorausfahrenden Fahrzeug 4 dient. Anstelle von Radarsensoren zur Abstandsmessung können z.B. auch andere optische bzw. elektromagnetische Messverfahren oder Ultraschallmessverfahren eingesetzt werden. Ferner weist die Informationsvorrichtung 1 einen Videosensor 6 auf, der den Fahrraum vor dem Fahrzeug 2 erfasst. Mittels eines Wegesensors 7 wird eine Geschwindigkeit des Fahrzeugs 2 gemessen. Die Sensoren 5, 6, 7 sind an eine Auswerteeinheit 8 angeschlossen. Die Auswerteeinheit 8 vergleicht eine Geschwindigkeit des vorausfahrenden Fahrzeugs 4 mit der Geschwindigkeit des Fahrzeugs 2. Überschreitet die Geschwindigkeit des Fahrzeugs 2 die Geschwindigkeit des vorausfahrenden Fahrzeugs über ein vorgegebenes Maß, z.B. über mehr als 15 km/h, so wird von der Auswerteeinheit 8 eine Warnung ausgegeben. In einer weiteren Ausführungsform kann die Auswerteeinheit 8 auch eine Zuordnung zwischen einem Fahrzeugabstand des Fahrzeugs 2 zu dem vorausfahrenden Fahrzeug 4 und einer dem Abstand zugeordneten Geschwindigkeit aufweisen. Wird für eine Geschwindigkeit des Fahrzeugs 2 ein zugeordneter Abstand unterschritten, so wird ebenfalls eine Warnung von der Auswerteeinheit 8 ausgegeben. Die beiden genannten Kriterien können alternativ, aber auch in Verbindung für die Auslösung einer Warnung erforderlich sein. In einer weiteren Ausführungsform ist es auch möglich, dass die Grenzwerte für eine Geschwindigkeit und/oder einen Abstand, ab der bzw. ab dem eine Warnung ausgegeben werden soll, durch einen Benutzer einstellbar ist, so dass diese Grenzwerte an einen persönlichen Fahrstil des Benutzers angepasst werden können. Außer der Geschwindigkeit kann auch der Beschleunigungsunterschied zwischen dem vorausfahrenden und dem nachfolgenden Fahrzeug für eine Bestimmung dafür, ob das nachfolgenden Fahrzeug 2 bremsen sollte, berücksichtigt werden. Zudem ist es möglich, auch einen Querversatz zwischen den Fahrzeugen 2 und 4 zu bestimmen, um festzustellen, ob beide Fahrzeuge die gleiche Fahrspur benutzen.

In einer ersten Ausführungsform wird eine Warnung in Form eines Signaltons über einen Lautsprecher 9 in dem Fahrzeug ausgegeben. In einer weiteren, bevorzugten Ausführungsform ist eine Anzeige 10 vorgesehen, mittels der eine Warnung an den Fahrer des Fahrzeugs 2 ausgegeben wird. Die Anzeige 10 ist dabei z.B. in einer Mittelkonsole des Fahrzeugs 2 angeordnet. In einer bevorzugten Ausführungsform ist die Anzeige in einem Kombinationsinstrument mit einer Vielzahl von Anzeigen vor dem Fahrer des Fahrzeugs angeordnet.

In der Figur 2 ist ein Ausführungsbeispiel für eine Anzeigendarstellung in der Anzeige 10 gezeigt. Über den Videosensor 6 wird das vorausfahrende Fahrzeug 4 erfasst. In einer ersten Ausführungsform wird ein Bild des vorausfahrenden Fahrzeugs fotorealistisch in der Anzeige 10 dargestellt. Anstelle einer fotorealistischen Darstellung des Fahrzeugs kann das Fahrzeug auch in Form eines Fahrzeugpiktogramms 11 symbolhaft in der Anzeige 10 dargestellt werden. In einer besonderen Ausführungsform wird dabei ein Piktogramm so gewählt, dass es von seiner Farbe und/oder von seiner Form dem vorausfahrenden Fahrzeug entspricht. Hierzu bestimmt der Videosensor 6 die Farbe des vorausfahrenden Fahrzeugs und stellt das Fahrzeugpiktogramm 11 in der Anzeige 10 in der Farbe des vorausfahrenden Fahrzeugs 4 dar. Eine Fahrzeugform kann z.B. in Abhängigkeit von dem Fahrzeugtyp des vorausfahrenden Fahrzeugs bestimmt werden. Mittels des Videosensors 6 kann über die Auswerteeinheit 8 bestimmt werden, ob es sich bei dem vorausfahrenden Fahrzeug um ein Motorrad, um einen PKW, einen LKW oder z.B. einen Bus handelt. Für jeden dieser Fahrzeugtypen ist eine symbolhafte, piktogrammförmige Darstellung in einem Speicher der Auswerteeinheit 8 so abgelegt, dass das jeweilige Piktogramm in Abhängigkeit von der Form des vorausfahrenden Fahrzeugs, also in diesem Fall von dem erfassten Fahrzeugtyp, für die Darstellung ausgewählt wird.

In einer weiteren Ausführungsform kann die Farbe des Fahrzeugpiktogramms 11 auch davon abhängig gemacht werden, ob eine Verringerung der Geschwindigkeit des Fahrzeugs erforderlich ist. Wird das vorausfahrende Fahrzeug z.B. in grün dargestellt, so ist eine Verzögerung nicht erforderlich, während bei einer Einfärbung in gelb ein Erreichen einer kritischen Grenze dargestellt wird. Bei einer roten Einfärbung ist ein Bremsen erforderlich.

Wird von der Auswerteeinheit 8 festgestellt, dass sich die Geschwindigkeit des vorausfahrenden Fahrzeugs so verringert, dass auch die Geschwindigkeit des Fahrzeugs 2 selbst verringert werden muss, so werden grafisch Bremsleuchten 12, 12' in aktiviertem Zustand in das Fahrzeugpiktogramm 11 bzw. in eine fotorealistische Darstellung des vorausfahrenden Fahrzeugs in der Anzeige 10 eingeblendet. Bei der Betrachtung der Anzeige 10 erkennt der Fahrer nun die aktivierten Bremsleuchten 12, 12', wobei ein Aufleuchten der Bremsleuchten 12, 12' in einer bevorzugten Ausführungsforin zusätzlich durch einen Signalton mittels der Lautsprecher 9 unterstützt wird. Für eine Darstellung der Bremsleuchten 12, 12' in der Anzeige 10 ist es dabei nicht erforderlich, dass Bremsleuchten 13, 13' des vorausfahrenden Fahrzeugs 4 auch aktiviert werden müssen. Vielmehr ist eine Aktivierung der virtuellen Bremsleuchten 12, 12', die lediglich in der Anzeige 10 dargestellt werden, davon abhängig, ob die Auswerteeinheit 8 die Geschwindigkeit und/oder den Abstand des vorausfahrenden Fahrzeugs 4 so bewertet, dass auch eine Verringerung der Geschwindigkeit des Fahrzeugs 2 selbst erforderlich ist. In einer bevorzugten Ausgestaltung kann als eine weitere, hinreichende, aber nicht notwendige Bedingung für eine Warnung mittels einer Aktivierung der virtuellen, in der Anzeige 10 dargestellten Bremsleuchten 12, 12' jedoch auch eine Erfassung einer Aktivierung der Bremsleuchten 13, 13' des vorausfahrenden Fahrzeugs über den Videosensor 6 aufgenommen werden.

In einer weiteren Ausführungsform wird auch eine Aktivierung eines Fahrzeugblinkers 14 des vorausfahrenden Fahrzeugs über den Videosensor 6 ausgewertet. In diesem Fall wird von der Auswerteeinheit 8 die Einblendung eines Richtungspfeils 15 in die Anzeige 10 veranlasst. Anhand des Richtungspfeils 15, der bevorzugt in orange dargestellt ist, wie es für eine Farbe eines Blinkers im allgemeinen üblich ist, ist es möglich, dass der Fahrer zusätzlich zu dem Blinker 14 des vorausfahrenden Fahrzeugs auf ein Abbiegen des vorausfahrenden Fahrzeugs 4 hingewiesen wird. Zur weiteren Information des Fahrers kann ergänzend ein Warnsymbol 16 bei einer erforderlichen Verzögerung des Fahrzeugs in die Anzeige 10 eingeblendet werden. Ferner kann der Abstand zu dem vorausfahrenden Fahrzeug über geeignete Fahrbalken 17, deren Einfärbung in Abhängigkeit von einer Gefährdung gewählt wird, dargestellt werden. Besteht keine Gefahr, so können die Fahrbalken 17 in grün dargestellt werden, während bei einer gelben, orangen oder roten Verfärbung mit Steigerung der Farbe zu einem Rotton ein umso stärkerer Eingriff des Fahrers zur Verzögerung des Fahrzeugs 2 erforderlich wird. Ergänzend kann der Abstand 18 zu dem vorausfahrenden Fahrzeug in Klartext in die Anzeige 10 eingeblendet werden.

Anstelle einer Einblendung der Bremsleuchten 12, 12' in der Anzeigefläche innerhalb eines Piktogramms 11 des Fahrzeugs kann eine entsprechende Bremsleuchte auch stattdessen oder auch ergänzend in einer anderen Anzeige im Fahrzeug oder an einer anderen Position der Anzeigefläche vorgenommen werden. So kann z.B. ein Bremssignal in Form eines roten Balkens 21 in die Anzeige 10 eingeblendet werden. Ferner ist es möglich, eine entsprechende Bremswarnanzeige auch in einem sogenannten Head-Up-Display in die Windschutzscheibe vor dem Fahrer zu projizieren, wobei in das Head-Up-Display z.B. ein roter Balken oder eine Textanzeige "Bremsen!" eingeblendet wird.

In einer weiteren Ausführungsform ist es möglich, dass die von dem Videosensor 6 aufgenommen Bilddaten in einem Speicher 19 der Informationsvorrichtung abgelegt werden, so dass z.B. nach einem Unfall ein Kennzeichen 20 des vorausfahrenden Fahrzeugs 4 anhand der aufgezeichneten Bilddaten ermittelt werden kann. Ferner lässt sich hiermit auch ein möglicher Verlauf eines Unfalls rekonstruieren.

## Patentansprüche

1. Informationsvorrichtung für den Fahrer eines Fahrzeugs (2) mit einer Messeinheit (5, 6) zur Bestimmung einer Geschwindigkeit eines vorausfahrenden Fahrzeugs (4) und mit einer Ausgabeeinheit (9, 10) zur Ausgabe einer Warnung bei einer derartigen Verringerung der Geschwindigkeit des vorausfahrenden Fahrzeugs (4), dass auch die Geschwindigkeit des Fahrzeugs (2) selbst verringert werden muss, **gekennzeichnet durch** eine Anzeige (10) insbesondere in einem Kombinationsinstrument des Fahrzeugs (2) zur zumindest symbolhaften Darstellung (11) des vorausfahrenden Fahrzeugs (4), wobei eine Wamanzeige (12, 12') auf die zumindest symbolhafte Darstellung (11) des vorausfahrenden Fahrzeugs (4) derart bezogen ist, dass zur Warnung vor dem vorausfahrenden Fahrzeug eine aktivierte Bremsleuchte (12, 12') in der zumindest symbolhaften Darstellung (11) des vorausfahrenden Fahrzeugs (4) dargestellt wird.

2. Informationsvorrichtung nach Anspruch 1, **dadurch gekennzeichnet, dass** in der Anzeige ein Richtungspfeil (15) zur Anzeige einer seitlichen Bewegung des vorausfahrenden Fahrzeugs (4) angezeigt wird.

3. Informationsvorrichtung nach einem der vorherigen Ansprüche, **gekennzeichnet durch** einen Videosensor (6) zur Überwachung des Fahrraums (3) vor dem Fahrzeug (2).

4. Informationsvorrichtung nach Anspruch 3, **dadurch gekennzeichnet, dass** der Videosensor (6) eine Aktivierung einer Bremsleuchte (13, 13') des vorausfahrenden Fahrzeugs (4) zur Bestimmung einer Verringerung der Geschwindigkeit des vorausfahrenden Fahrzeugs (4) erfasst.

5. Informationsvorrichtung nach einem der Ansprüche 3-4, **dadurch gekennzeichnet, dass** der Videosensor (6) eine Farbe und/oder eine Form des vorausfahrenden Fahrzeugs (4) zur Beeinflussung einer Darstellung des vorausfahrenden Fahrzeugs mit der Ausgabeeinheit (10) erfasst.

6. Informationsvorrichtung nach einem der Ansprüche 3-5, **gekennzeichnet durch** einen Speicher (19) zur Aufzeichnung einer Verkehrssituation vor dem Fahrzeug.

7. Informationsvorrichtung nach einem der vorherigen Ansprüche, **gekennzeichnet durch** eine Messeinheit (5) zur Bestimmung des Abstands des Fahrzeugs zu dem vorausfahrenden Fahrzeug (4).

8. Informationsvorrichtung nach einem der vorherigen Ansprüche, **dadurch gekennzeichnet, dass** eine Messeinheit (5) zur Messung der Geschwindigkeit und/oder des Abstands zu dem vorausfahrenden Fahrzeug als ein Radarsensor ausgebildet ist.

## Claims

1. Information device for the driver of a vehicle (2) having a measuring unit (5, 6) for determining a velocity of a vehicle (4) travelling in front, and having an output unit (9, 10) for outputting a warning when the velocity of the vehicle (4) travelling in front is reduced to such an extent that the velocity of the vehicle (2) itself also has to be reduced, **characterized by** a display (10), in particular in a combination instrument of the vehicle (2), for at least symbolic representation (11) of the vehicle (4) travelling in front, a warning display (12, 12') being related to the at least symbolic representation (11) of the vehicle (4) travelling in front such that, in order to issue a warning about the vehicle travelling in front an activated brake light (12, 12') is represented in the at least symbolic representation (11) of the vehicle (4) travelling in front.

2. Information device according to Claim 1, **characterized in that**, in the display, a direction arrow (15) for displaying a lateral movement of the vehicle (4) travelling in front is displayed.

3. Information device according to one of the preceding claims, **characterized by** a video sensor (6) for monitoring the travel space (3) in front of the vehicle (2).

4. Information device according to Claim 3, **characterized in that** the video sensor (6) senses an activation of a brake light (13, 13') of the vehicle (4) travelling in front in order to determine a reduction in the velocity of the vehicle (4) travelling in front.

5. Information device according to one of Claims 3-4, **characterized in that** the video sensor (6) senses a colour and/or a shape of the vehicle (4) travelling in front in order to influence a representation of the vehicle travelling in front with the output unit (10).

6. Information device according to one of Claims 3-5, **characterized by** a memory (19) for recording a traffic situation in front of the vehicle.

7. Information device according to one of the preceding claims, **characterized by** a measuring unit (5) for determining the distance between the vehicle and the vehicle (4) travelling in front.

8. Information device according to one of the preceding claims, **characterized in that** a measuring unit (5) for measuring the velocity and/or the distance from the vehicle travelling in front is embodied as a radar sensor.

## Revendications

1. Dispositif d'information pour le conducteur d'un véhicule (2) comprenant une unité de mesure (5, 6) servant à déterminer une vitesse d'un véhicule précédent (4) et comprenant une unité de sortie (9, 10) servant à émettre un avertissement dans le cas où la vitesse du véhicule précédent (4) diminue de telle sorte que la vitesse du véhicule (2) elle-même doit être diminuée,
**caractérisé par**
un affichage (10) en particulier dans un instrument combinatoire du véhicule (2) pour une représentation au moins symbolique (11) du véhicule précédent (4), un affichage d'avertissement (12, 12') étant rapporté à la représentation au moins symbolique (11) du véhicule précédent de sorte que, pour l'avertissement relatif au véhicule précédent (4), un feu de stop activé (12, 12') est représenté dans la représentation au moins symbolique (11) du véhicule précédent (4).

2. Dispositif d'information selon la revendication 1,
**caractérisé en ce que**
sur l'affichage, une flèche directionnelle (15) est indiquée pour afficher un mouvement latéral du véhicule précédent (4).

3. Dispositif d'information selon l'une des revendications précédentes,
**caractérisé par**
un capteur vidéo (6) pour surveiller la distance de conduite (3) devant le véhicule (2).

4. Dispositif d'information selon la revendication 3,
**caractérisé en ce que**
pour déterminer une diminution de la vitesse du véhicule précédent (4), le capteur vidéo (6) détecte une activation d'un feu de stop (13, 13') du véhicule précédent (4).

5. Dispositif d'information selon l'une des revendications 3 à 4,
**caractérisé en ce que**
le capteur vidéo (6) détecte une couleur et/ou une forme du véhicule précédent (4) pour influencer une représentation du véhicule précédent avec l'unité de sortie (10).

6. Dispositif d'information selon l'une des revendications 3 à 5,
**caractérisé par**
une mémoire (19) pour enregistrer une situation de circulation devant le véhicule.

7. Dispositif d'information selon l'une des revendications précédentes,
**caractérisé par**
une unité de mesure (5) servant à déterminer la distance du véhicule par rapport au véhicule précédent (4).

8. Dispositif d'information selon l'une des revendications précédentes,
**caractérisé en ce qu'**
une unité de mesure (5) servant à mesurer la vitesse du véhicule précédent et/ou la distance par rapport à celui-ci est réalisée sous la forme d'un capteur radar.
